# EUROPEAN PATENT APPLICATION

(11) **EP 3 110 183 A1**
(43) Date of publication of application: **28.12.2016**
(21) Application number: 16176248.9
(22) Date of filing: 24.06.2016
(51) Int. Cl.: H04W 4/26, H04W 28/16, H04W 28/20, H04W 72/12, H04L 12/801

(54) **FEEDBACK-BASED PACKET CONTROL SYSTEM**

(30) Priority: 25.06.2015 US 201562184753 P; 11.05.2016 US 201615152440
(71) Applicant: Japan Communications Inc., Tokyo 105-0001 (JP)
(72) Inventor: SANDA, Frank Seiji, Manhasset, NY New York 11030 (US); FUKUDA, Naohisa, Kitasaku-gun, Nagano 389-0115 (JP); KUDO, Yasushi, Marietta, GA Georgia 30062 (US); KANAYAMA, Masakazu, Tokyo, Tokyo 105-0001 (JP); DEICKMAN, Greg, Aurora, CO Colorado 80016 (US); PROUTY, Jason, Tokyo, Tokyo 105-0001 (JP); OBREY, Justice, Tokyo, Tokyo 105-0001 (JP); TSURUGA, Hirokazu, Tokyo, Tokyo 105-0001 (JP); ROSEN, Nadav Kalman, Tokyo, Tokyo (JP)
(74) Representative: D Young & Co LLP

(57) **Abstract**

Methods and systems for dynamically controlling per-session throughput and application priority are provided. Said method is under the control of one or more computer systems configured with executable instructions. The method comprises receiving, at a mobile virtual network operator, a request to initiate a data-based application. The request is received from a mobile device that is associated with a data plan that is managed by the mobile virtual network operator. The data-based application is associated with a category of data. The method also comprises evaluating the request at a feedback-based packet control system of the mobile virtual network operator utilizing a speed monitoring module and business rule engine in evaluating the request. The method further comprises allocating data to the data-based application request. The allocation of data is based on a data plan and and/or category of data. Additionally, the method comprises providing the data-based application request to a server.

## Description

### CROSS-REFERENCE TO RELATED APPLICATIONS

This application claims the benefit of U.S. Provisional Patent Application Serial No. 62/184,753 entitled "Feedback-Based Packet Control System," filed June 25, 2015, the disclosure of which is hereby incorporated by reference in its entirety.

### BACKGROUND OF THE INVENTION

The business model of a Mobile Virtual Network Operator ("MVNO") offering data services typically involves acquiring either data capacity or bandwidth (sometimes referred to as "throughput") from a Mobile Network Operator ("MNO") and selling value-added wireless data connectivity to their customers. Due to the nature of their business model, an MVNO's available bandwidth is usually much more limited than that of an MNO's because an MVNO will typically only buy enough bandwidth to serve their customers. Conventional traffic management technologies have been effective in managing network data traffic either at a macro level or region-specific level to answer needs of MNOs. MVNOs that offer services with the limited overall network bandwidth, on the other hand, needed technologies to be able to control network data traffic more responsively at a finer level based on specific services that they offer, and utilize the network resources in a cost effective manner.

### SUMMARY OF THE INVENTION

A Mobile Virtual Network Operator (MVNO) may offer data services having added value that comes from a number of different services. An example of value-added services is offering a variety of wireless connectivity plans, including, but not limited to: high-speed 3G or LTE connections with limited data usage; speed limited connections without limitations on data volume; pre-paid, high-speed data connections; security-embedded data connections; as well as providing customer service. Due to the nature of their business model, an MVNO's available bandwidth is usually much more limited than that of an MNO's because an MVNO may only buy enough bandwidth to serve their customers. As such, in order for such an MVNO to maximize its profits, it is beneficial to have efficient use of total available bandwidth.

For MVNOs to offer various different wireless data connectivity plans with different connection speeds, the MVNOs may use technologies that allow an MVNO to offer different throughput for end user wireless connections either per connection or per session. For example, the MVNO may use a gateway between a General Packet Radio Service (GPRS) wireless data network and other external packet data networks using a Gateway GPRS Support Node (GGSN) for 3G. The MVNO may also use a Packet Data Network Gateway (P-GW) for Long-Term Evolution (LTE). Additionally, the MVNO may use Quality of Service (QoS) or Policy and Charging Enforcement Function (PCEF) equipment at the Internet Protocol ("IP") layer in their network node. Any of these technologies may allow an MVNO to prioritize IP applications based on a type of application, port number, IP header, etc. For instance, Voice over IP ("VoIP") packet traffic may be given higher priority than email traffic. In particular, VoIP may receive priority so that live voice conversations can be made naturally and in real-time without delay. Email delivery, on the other hand, may be delayed a few seconds without recipients noticing.

When sufficient backhaul (throughput or capacity) is present in the backbone network, an MVNO may work well without needing to prioritize particular services, such as prioritizing VoIP over email delivery. In the case of an MVNO business, where the total bandwidth is limited, per connection-based packet throughput control or priority control may not be sufficient. In particular, total user traffic may be greater than an MVNO's available bandwidth. Thus, preconfigured per session-based throughput may not be available to some users or the priority applied to a certain application may not be high enough to maintain sufficient quality for services such as VoIP.

One aspect of the invention provides a method for dynamically controlling per-session throughput and application priority, said method under the control of one or more computer systems configured with executable instructions. The method comprises receiving, at a mobile virtual network operator, a request to initiate a data-based application, wherein the request is received from a mobile device that is associated with a data plan that is managed by the mobile virtual network operator, and wherein the data-based application is associated with a category of data. The method also comprises evaluating the request at a feedback-based packet control system of the mobile virtual network operator, wherein the feedback-based packet control system utilizes a speed monitoring module and business rule engine in evaluating the request. Additionally, the method comprises evaluating the request at a feedback-based packet control system of the mobile virtual network operator, wherein the feedback-based packet control system utilizes a speed monitoring module and business rule engine in evaluating the request. The method also comprises providing the data-based application request to a server.

Another aspect of the invention provides a computer-implemented method for dynamically controlling per-session throughput and application priority, said method under the control of one or more computer systems configured with executable instructions. The computer-implemented method comprises receiving a predetermined amount of bandwidth at a mobile virtual network operator. The computer-implemented method also comprises monitoring real-time performance of data traffic across the mobile virtual network operator, wherein monitoring real-time performance of data traffic includes assessing actual speed performance, packet loss, and packet retransmission rate. Additionally, the computer-implemented method comprises assessing servomechanism feedback of data traffic across the mobile virtual network operator. Further, the method comprises, based on the monitored real-time performance and the assessed servomechanism feedback, determining a packet flow control configuration for one or more sessions that are managed by the mobile virtual network operator. The computer-implemented method also comprises applying the packet flow control configuration to the one or more sessions that are managed by the mobile virtual network operator.

The invention discloses methods and systems provided for controlling per session throughput and IP application priority dynamically, utilizing a servomechanism and real-time performance monitoring, and applying the most appropriate packet flow control configurations to each connected session. This way, an MVNO's total bandwidth could be allocated most efficiently, without having to sacrifice the user experience of any particular service plan or user group.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the invention will be obtained by reference to the following detailed description that sets forth illustrative embodiments, in which the principles of the invention are utilized, and the accompanying drawings of which:
FIG. **1** illustrates an exemplary system that provides a Feedback-Based Packet Control system to manage bandwidth allocation of a mobile virtual network operator, in accordance with embodiments of the invention.
FIG. **2** illustrates components of a Feedback-Based Packet Control system, in accordance with embodiments of the invention.
FIG. **3** illustrates a workflow that illustrates a relationship between components of the Feedback-Based Packet Control system, in accordance with embodiments of the invention.
FIG. **4** illustrates another exemplary system that provides a Feedback-Based Packet Control system to manage bandwidth allocation of a mobile virtual network operator, in accordance with embodiments of the invention.
FIG. **5** illustrates a schematic of interactions between components of the Feedback-Based Packet Control system, in accordance with embodiments of the invention.
FIG. **6** illustrates an embodiment in which a particular user device connects to the internet, in accordance with embodiments of the invention.
FIG. **7** illustrates a workflow showing performance balancing, in accordance with embodiments of the invention.
FIG. **8** illustrates an example of a user group table, in accordance with embodiments of the invention.

### DETAILED DESCRIPTION OF THE INVENTION

The invention discloses methods and systems provided for controlling per session throughput and IP application priority dynamically, utilizing a servomechanism and real-time performance monitoring, and applying the most appropriate packet flow control configurations to each connected session. This way, an MVNO's total bandwidth may be allocated most efficiently, without having to sacrifice the user experience of any particular service plan or user group.

In examples, a feedback-based packet control system that automatically adjusts the mobile speed of different services to different consumers based on business rules is provided. In examples of the invention, a servomechanism that consists of four main components may be used to adjust the services of different customers. These four components may include a speed monitoring module, a business rule engine, a deep packet inspection unit, and a packet controller. The speed monitoring module may measure the speed of the service. The deep packet inspection unit may determine the number of packets lost and re-transmitted packets. The packet controller may adjust the speed of the service. Additionally, the business rule engine may be responsible for setting requirements based on, but not limited to, the date, type of service, and type of consumer. All four components may operate with each other based on feedback from each component.

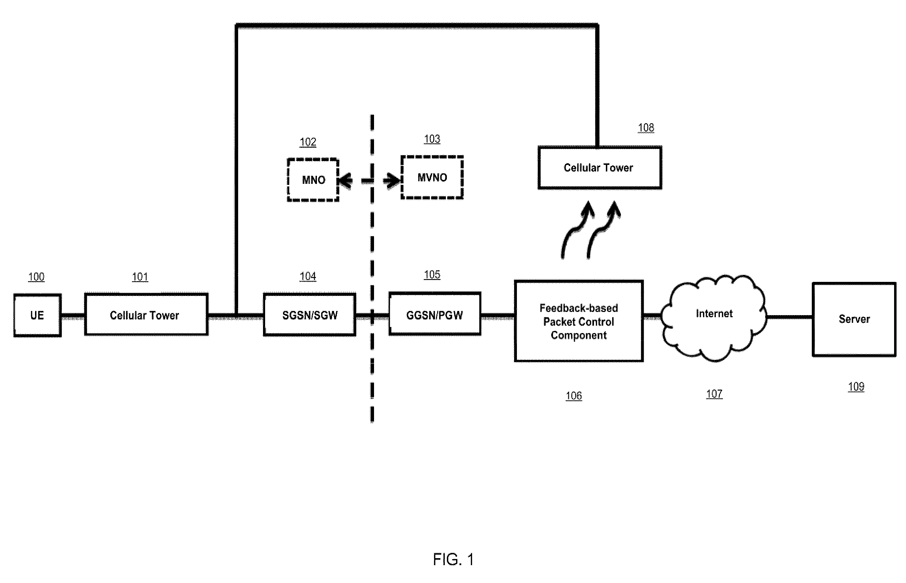

FIG. **1** illustrates an exemplary system that provides a Feedback-Based Packet Control system **106** to manage bandwidth allocation of a mobile virtual network operator, in accordance with embodiments of the invention. In this figure, user equipment ("UE") **100** may start a data-based application. A nearby cellular tower **101** may pick up the request to create a session and send it to the appropriate MNO's Serving GPRS (General Packet Radio Service) Support Node ("SGSN") **104.** The SGSN **104** may be responsible for handling packet transmission from cellular tower **101** on the MNO side **102.** In turn, the SGSN **104** may then distribute the request to the MVNO side **103.** On the MVNO side **103,** the Gateway GPRS Support Node ("GGSN") **105** may receive the request. The SSGN **104** and GGSN **105** act as gateways between MNO side **102** and MVNO side **103.** Once the request is processed, the request may be forwarded to the Feedback-Based Packet Control system **106.** The Feedback-Based Packet Control system **106** may be embedded within the MVNO. Additionally, the Feedback-Based Packet Control system **106** may be where the performance monitoring takes place before the request proceeds to the internet **107** and the server **109** of the requested data-based application. In examples, a speed monitoring module within the Feedback-Based Packet Control system **106** may be connected to its own cellular tower **108.** In examples, the speed monitoring module may act similarly to a user equipment, such as user equipment **100.**

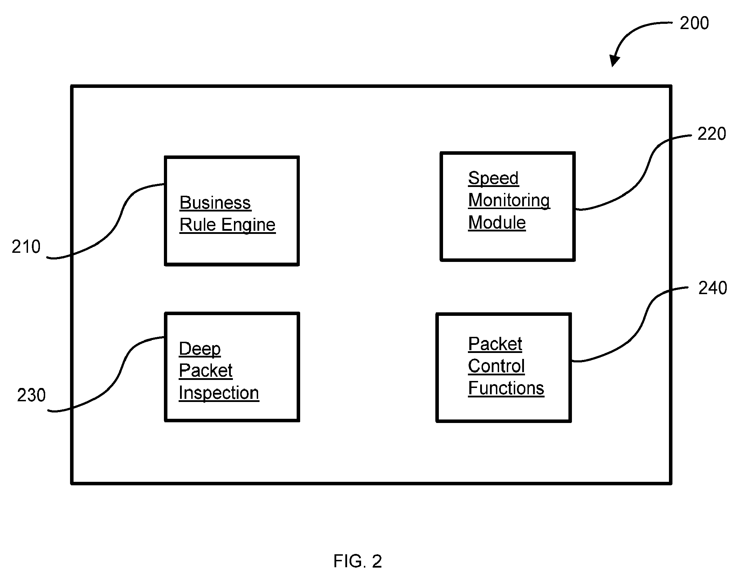

FIG. **2** illustrates components of a Feedback-Based Packet Control system **200,** in accordance with embodiments of the invention. The Feedback-Based Packet Control system **200** as provided in FIG. **2** includes four separate components working together: the Business Rule Engine ("BRE") **210,** the Speed Monitoring Module ("SMM") **220,** Deep Packet Inspector ("DPI") **230,** and Packet Controller ("PC") **240.**

The BRE **210** may define hierarchical user groups, such as different enterprises and consumer groups. In an example, Enterprise-A may be a company that an MVNO serves based on a contract for a group of 3G/LTE mobile users within the enterprise who use a specific Tablet PC model with connectivity speeds of up to 300kbps and who only use email and web browsing during business hours, Monday through Friday. Another example is Consumer Group-A, which may be a group of users that uses the high-speed internet connectivity service the MVNO offers. A third example is Consumer Group-B, which may be another group of users with up to 150kbps internet connectivity service. Consumer Group-B may also have other plans associated with it, such as a Pre-paid 200 Hour plan and a 1GB per month plan, both still restricted to 150kbps. The BRE **210** may also have a calendar and time table. The time table and calendar may be used in the speed adjustments of the different services of the different user groups.

The BRE **210** may also store business rules in its database system. These business rules may be customized. Additionally, these business rules may include data such as total available bandwidth, guaranteed bandwidth to be assigned to a particular enterprise based on a service contract, minimum acceptable session throughput for each different service plan at different times of day, different days of the week, or different seasons, and minimum acceptable packet loss for different IP applications, such as VoIP, Web browsing, P2P, and email. These business rules may also include bandwidth allotments and performance thresholds for different types and models of end-user devices, such as smartphones, tablet PCs, USB cellular modems, and cellular routers.

The SMM **220** may test the connectivity and transmission speeds of offered services and plans. In examples, the SMM **220** may test the connectivity and transmission speeds of all offered service plans. The SMM **220** may be a device that consists of a Central Processing Unit (CPU) and memory, multiple 3G/LTE mini-Peripheral Component Interconnect Express (PCIe) modules, multiple SIM slots for each mini-PCIe modules, and multiple RF antenna connectors. Subscriber Identity Module (SIM) cards provisioned for each offered service plan (i.e. High-Speed, 300kbps, and Pre-paid plans, etc.), or SIM cards specifically provisioned for a particular enterprise, may be inserted in the SIM card slots and external 3G/LTE antennas may be connected through the antenna connectors. The CPU may send and receive certain sized data files in different formats using different communication ports to and from a predefined file server on the internet or in a specific network node at regular intervals. Additionally, the CPU may compute data transmission and reception throughput based on file size and actual duration of data transmission or reception. Results of these measured throughputs of different user groups, different service plans, and through different communication ports may be sent to the database portion of the BRE **210** on a real-time basis. PC **240** may adjust the speed based on the requirements set by the BRE **210.** In examples, PC **240** may be responsible for reconfiguring packet delay for each user group. Additionally, PC **240** may be responsible for reconfiguring packet delay for each service plan. PC **240** may also be responsible for reconfiguring packet delay for each application on the patent controller. In alternative examples, the base stations may not be used, but a direct Ethernet connection may be utilized between the server **109** and the Feedback-Based Packet Control system **160** with the same IP address range of each user group to measure the speeds of the different services. Using a direct connection may remove external influences that may occur due to unstable wireless conditions.

DPI **230** may utilize a conventional IP packet analyzer. Additionally, DPI **230** may measure the packet loss and packet re-transmission rate of connected IP sessions from different user groups, different service plans, and different device models on a real-time basis. These statistics may be sent to the database portion of the BRE **210.** Based on those statistics, the BRE **210** may adjust the requirements appropriately. In examples, the BRE **210** may increase the speed of a service if the DPI **230** detects a high packet loss and a high packet re-transmission rate, or decrease the speed of a service if the DPI **230** detects a low packet loss and a low packet re-transmission rate, depending on the business rules at that time.

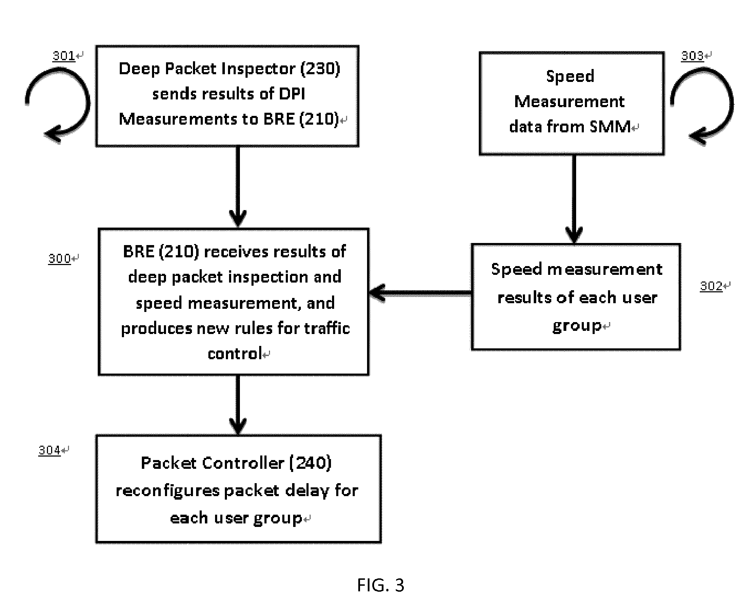

FIG. **3** illustrates a workflow that illustrates relationships between components of the Feedback-Based Packet Control system, in accordance with embodiments of the invention. In particular, FIG. **3** illustrates the logical relationship between the different modules of the Feedback-Based Packet Control system and the BRE's **210** workflow. The business rules **300,** DPI measurement results **301,** and speed measurement results **302** of each user group may be located within the database of the BRE **210.** As stated above, the business rules typically include, but may not be limited to, specifying total available bandwidth, maximum speed of different services, speed threshold of different services, application priority, speed threshold per application, busy seasons of the year, busy days of the week, and busy times of the day. The DPI measurement results **301** may come from the DPI **230.** Additionally, the DPI measurement results **301** may include packet delay statistics due to packet drop and packet retransmission per user group and per application. Lastly, the speed measurement results of each user group **302** may come from the SMM **220.** In particular, the speed measurement results of each user group **302** may come from speed measurement data from the SMM **303.** The speed measurement data from SMM **303** may continuously provide the speed measurement results of each user group in a continuous manner as indicated by the feedback loop arrow. Furthermore, by receiving the DPI measurement results **301** in a periodic manner as indicated by the feedback loop arrow, the BRE **210** may determine available bandwidth allocation to different user groups at programmable intervals based on the business rules **300.** By analyzing the data received from the SMM **220** and DPI **230** in a periodic manner, the BRE **210** can make the necessary speed adjustments to the necessary services and user groups. In examples, the BRE **210** may determine available bandwidth allocation to different user groups every two minutes. Additionally, PC **240** may appropriately make the necessary adjustments as far as packet delays are concerned, whether to increase or decrease packet delay, depending on the business rules **300.** In particular, the PC **240** may reconfigure packet delay for each user group, service plan, and application on the PC **240,** as provided at block **304.** Specific examples may include, but are not limited to, New Year's Eve. On New Year's Eve, data traffic might have a large spike in usage at about midnight on December 31^{st}, but only in certain applications. As such, the determination of which application is used at that time and by whom may affect bandwidth allocations. For an instance, if an individual consumer is trying to make a VoIP call at about that time, the individual customer might have priority over an enterprise that does not operate that late in the day. Thus, the bandwidths allocated for that user and enterprise may be adjusted accordingly based on circumstances.

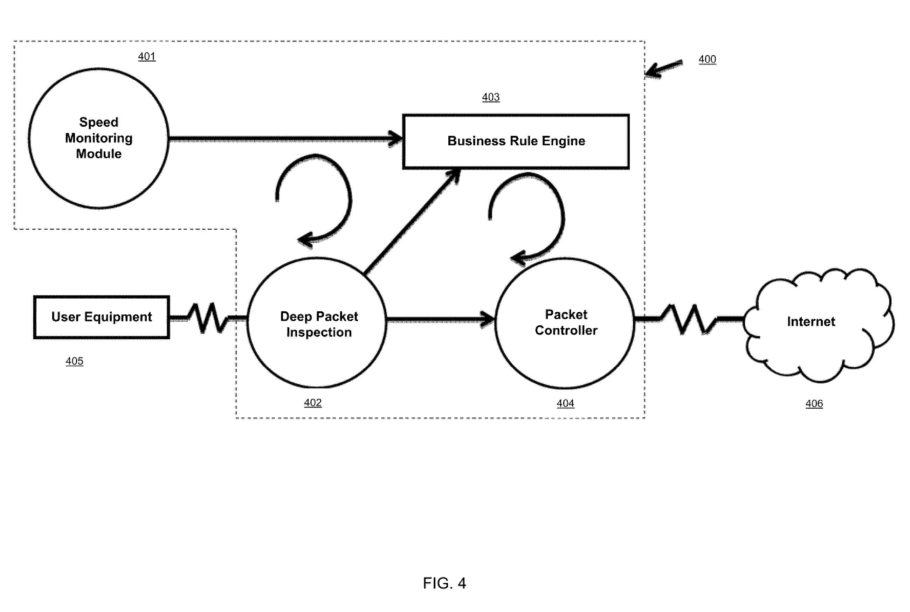

FIG. **4** displays another exemplary system that provides a Feedback-Based Packet Control system **400** to manage bandwidth allocation of a mobile virtual network operator, in accordance with embodiments of the invention. In particular, a Feedback-Based Packet Control system **400** to manage bandwidth allocation for a request received from user equipment **405** to access the internet **406** is provided. The components of the Feedback-Based Control system **400** may be similar to the components of the Feedback-Based Control system **200** in the following manner: Speed Monitoring Module **401** may be similar to Speed Monitoring Module **220;** Deep Packet Inspector **402** may be similar to Deep Packet Inspector **230;** Business Rule Engine **403** may be similar to Business Rule Engine **210;** and Packet Controller **304** may be similar to Packet Controller **240.** Once data from the SMM **401** and DPI **402** reaches the BRE **403,** the BRE **403** may be responsible for setting different control policies and priorities based on the time and specifications (type of application used, etc.) of the data received. The speed adjustment may start within the servomechanism, which is indicated by the feedback loops, of the SMM **401,** BRE **403,** mechanism of the Packet Controller **404,** and DPI **402** after the BRE **403** handles the received data. The BRE **403** may read the measured speed data originating from the SMM **401** and packet loss and packet retransmission statistics originating from the DPI **402** through the database. Then, the BRE **403** may compare these values with the different business rules and dynamically change the configuration of the PC **404** to most efficiently allocate the bandwidth to different enterprises and different service plan groups. Additionally, the BRE **403** may limit the packet throughput for different speed limit services, (i.e. 300kbps and 150kbps services), or for different device models (i.e. Tablet PCs or USB dongles, etc.), or both, by dynamically adjusting packet delays of each IP session. The PC **404** may further control remaining session length for time-based service plans, such as a High-Speed 200 Hours prepaid plan. Additionally, the PC **404** may terminate or throttle an IP session when volume-based plans are used up. The PC **404** may also send an alert to users and notify them that their service plans are maxed out, or pop-up a web page to allow users to refill or change their service plans. Furthermore, the PC **404** may adjust priority: maximum and minimum throughput for specific IP applications per session or for a group of specific IP applications based on preconfigured business rules, speed performance measurements conducted by the SMM **401,** and real-time DPI measurements. For example, the total bandwidth of an MVNO may be fully allocated to enterprises A and B and user groups A and B. The High-Speed service group's HTTP speed is measured at 2Mbps, and the 150kbps speed service is measured at 100kbps by the SMM **401.** If the business rules **300** specified a threshold speed of 1.5Mbps for the High-Speed service and a 120kbps threshold for the 150kbps service, the BRE **403** may revise the configuration of the PC **404** to throttle the High-Speed service down to 1.5Mbps and wait to receive the next set of measured values from the SMM **401.** If the speed of the 150kbps service increases to 120kbps, then speed control may end until a future rule violation is detected. The speed check is conducted on a regular basis by the SMM **401.**

Another example may include an instance when all Consumer Group services' speeds are measured slower than the threshold. In this case, provided it is specified in the business rules, particular IP applications such as P2P, Multi Media, or Android downloads may be throttled to slower throughput. As such, common IP applications, such as Web browsing, email, and VoIP, may gain faster speeds than the threshold until HTTP speeds come back to above threshold. In addition to the actual speed measured by the SMM **401,** real-time DPI measurement results **301** such as packet loss value and packet retransmission rates that can also be used to determine current level of service performance and speed.

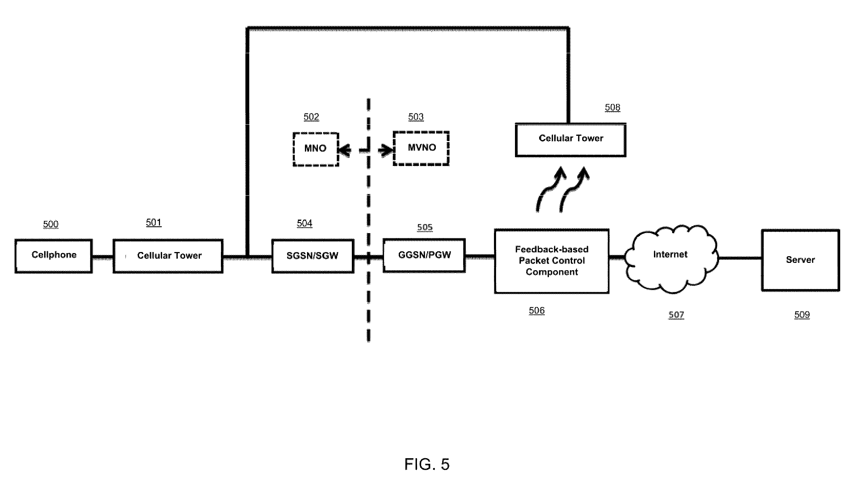

FIG. **5** illustrates a schematic of interactions between components of the Feedback-Based Packet Control system, in accordance with embodiments of the invention. In particular, FIG. **5** illustrates another exemplary system that provides a Feedback-Based Packet Control system **506** to manage bandwidth allocation of a mobile virtual network operator, in accordance with embodiments of the invention. FIG. **5** shows a specific embodiment of the invention in which a customer is using a cellphone **500** to connect to the internet **507** through the use of a cellular tower **501.** Additional components of FIG. **5** are similar to components of FIG. **1****.** In particular, MNO side **502** is similar to MNO side **102;** SGSN/SGW **504** is similar to SGSN/SGW **104;** MVNO side **503** is similar to MVNO side **103;** GGSN/PGW **505** is similar to GGSN/PGW **105;** Feedback-Based Packet Control system **506** is similar to Feedback-Based Packet Control system **106;** internet **507** is similar to internet **107;** cellular tower **508** is similar to cellular tower **108;** and server **509** is similar to server **109.**

Business rules **300** may define busy traffic hours, such as morning commute time, lunch time, or afternoon commute hours, so that high-volume applications, such as media streaming or content downloading speeds are throttled during these time windows and, as a result, offer reasonably faster speeds to common IP applications, such as web browsing and smartphone applications. This way, day and night, or seasonally high traffic days, such as Christmas or New Years, can be pre-programmed to avoid traffic congestions. Those business rules reside in the BRE **403** component of the Feedback Based Packet Control system.

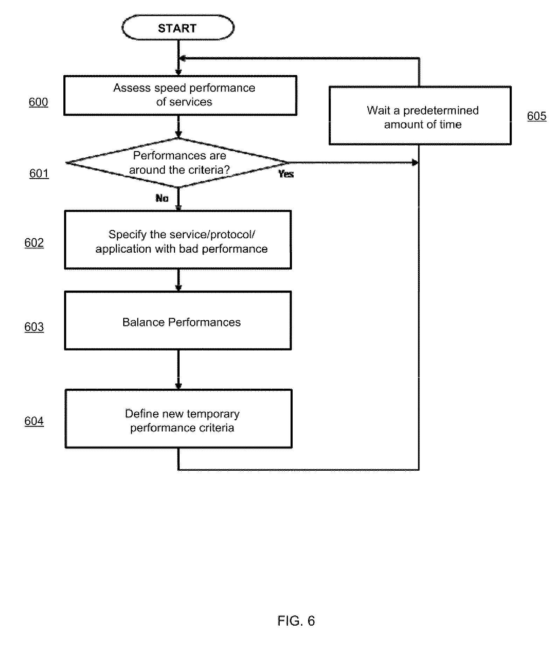

FIG. **6** illustrates a workflow showing performance balancing, in accordance with embodiments of the invention. In particular, FIG. **6** shows how the traffic control tuning may occur. At first, the performance of the different services may be checked. In examples, the performance of one or more of the different services may be checked. This is illustrated in FIG. **6** at block **600,** which provides that speed performances of the services are assessed. In examples, the speed performances of the services may be assessed by a speed monitoring module, such as SMM **401** in FIG. **4****.** In examples, the performance speed of services may be assessed in multiple ways. One of the ways to measure the speed performance of the service may be done by using the time stamps recorded during the transmission of the packet. For example, if a user downloads a certain file at a specific speed, there is an expectation as to how long it will require to download the file. In an ideal situation, when there are no packet delays, an 8 megabit per second service should be able to download a 100MB file in 100 seconds. If the packets sent or received are delayed, typically by packet loss and re-transmission, their recorded time stamps will also be delayed. If this packet delay exceeds the expected delay, more bandwidth may be required to download the file and the total bandwidth available for the MVNO will not be used optimally. Thus, the packet delay may lead to revenue loss and waste the MVNO's limited bandwidth. After the speed is measured by an SMM, such as SMM **401,** performance of the service may be assessed. In particular, the performance of the service is assessed against whether it met the rules/criteria set by the BRE **210.** This is illustrated at choice **601,** which asks whether performances are around the criteria. The performance may be assessed at user equipment **405.** As mentioned earlier, different criteria may include, but are not limited to, seasons (Year-end, New-Year, etc.), days of the week, times of the day, and types of applications used. If the performance meets those expectations, a fixed amount of time may pass before the speed performance of that specific service is checked again to ensure quality of service. This is illustrated at block 605, which provides for waiting a predetermined amount of time. In examples, the predetermined amount of time may be less than 10 seconds, 15 seconds, 20 seconds, 25 seconds, 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, 3 minutes, 4 minutes, 5 minutes, 10 minutes, 15 minutes, 20 minutes, 25 minutes, 30 minutes, 35 minutes, 40 minutes, 45 minutes, 50 minutes, 55 minutes, 60 minutes, 2 hours, or greater than 2 hours. Alternatively, if the performance does not meet those expectations, performance adjustment may occur.

When performance adjustment occurs, the service, protocol, and/or application with subpar performance may be identified. This is seen at block **602.** In particular, the service, protocol, and/or application with subpar performance may be identified by a deep packet inspection component, such as DPI **602.** Next, at block **603,** performance balancing is executed. In particular, the performance balancing may be executed by a packet controller, such as PC **404.** The performance balance that is executed by PC **404** may determine whether or not the speed needs to be increased or decreased. At block **604,** when the performance balance is completed, a new temporary performance criteria may be set. In particular, the new temporary criteria may be set by a business rule engine, such as BRE **403.** Additionally, the cycle of assessing performance and adjusting parameters may continue after a fixed amount of time so as to continuously maintain proper performance.

In some implementations, a time interval of executing the aforementioned cycle (i.e. a time interval of a feedback cycle) may be implemented as a tunable parameter. In examples, the time interval value may depend on the shortest interval value of the maximum time allowed to recover from a state where the traffic is below a required minimum network speed (the network bandwidth threshold), as defined as an attribute of a user group. The time interval value may range from a fraction of a second (e.g. when a particular user group features a high level of service quality) to a few hours depending on a level of service quality needed, as agreed with users of the services. The minimum value of the time interval may be larger than the total time required to process one feedback cycle. This minimum value may include scanning the traffic speed of data transmission of users, comparing the scanned traffic speed against the minimum traffic threshold value, and adjusting the traffic to satisfy the traffic requirement for respective user groups. As the time interval becomes larger, users may find the time lag of network speed recovery to be the more noticeable. Typical implementations may feature some value between 3 and 5 minutes.

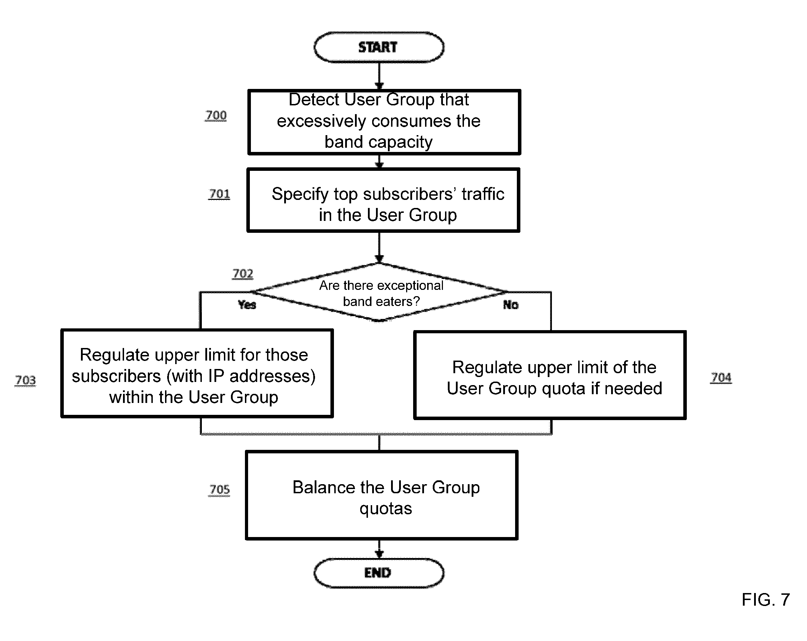

FIG. **7** illustrates a workflow showing performance balancing, in accordance with embodiments of the invention. In particular, FIG. 7 shows how performance balancing may be executed. Initially, at block **700,** the system may detect a user group that excessively consumes bandwidth. For example, the system may detect a user group that consumes more than a threshold amount of bandwidth capacity. The assessment of bandwidth consumption may be independent of whether the bandwidth consumed is high-speed/HTTP, high-speed/Multimedia, etc. After the user group is identified, the data consumption of the top users of that user group may be specified at block **701.** In examples, users/subscribers within a user group may be categorized based on their bandwidth consumption. After this categorization takes place, a determination may be made as to whether one or more users are the root cause for the high amount of bandwidth consumption. This is illustrated at choice **702.** If the high rate of bandwidth use is only associated with one user, or with a small group of users, there may be no need to penalize an entire user group . In examples, a small group of users may be considered to be less than 2 users, 3 users, 4 users, 5 users, 6 users, 7 users, 8 users, 9 users, 10 users, 15 users, 20 users, 25 users, 30 users, 35 users, 40 users, 50 users, 60 users, 70 users, 80 users, 90 users, 100 users, 200 users, 300 users, 400 users, 500 users, 1,000 users, or more than 1,000 users. Instead, adjustments may be made to the upper limit of the speed of the particular user, or small group of users, that is using an excessive amount of bandwidth. This is illustrated at block **703,** which provides for regulating an upper limit for those subscribers (with IP addresses) within the user group. For example, if it is determined that ten users within the user group are using 10x the amount of bandwidth as the average user within the user group, the upper limit for those ten users may be regulated, while the upper limit for the rest of the group may not be regulated.

However, if multiple users within a user group are utilizing a high amount of bandwidth, speeds may be adjusted for the whole user group of users/subscribers that contains the multiple subscribers who are using a great amount of bandwidth. For example, if more than a threshold number of users within a user group are utilizing a high amount of bandwidth, speeds may be adjusted for the whole user group of users/subscribers that contain those users. This is illustrated at block **704,** which provides for regulating an upper limit for the user group quota if needed. In examples, a threshold number of users that are using an excessive amount of bandwidth may be set at more than 10 users, 15 users, 20 users, 25 users, 30 users, 35 users, 40 users, 50 users, 60 users, 70 users, 80 users, 90 users, 100 users, 200 users, 300 users, 400 users, 500 users, 1,000 users, or more than 1,000 users. In additional examples, if most of the users within the user group are using more bandwidth than an average user of the MVNO, or if there are no particular "exceptional" users, then the entire user group may be regulated and/or penalized. Adjustments made so as to reduce the bandwidth consumption of the greatest users of bandwidth may help in balancing the quotas of the rest of the user groups, as provided at block **705.**

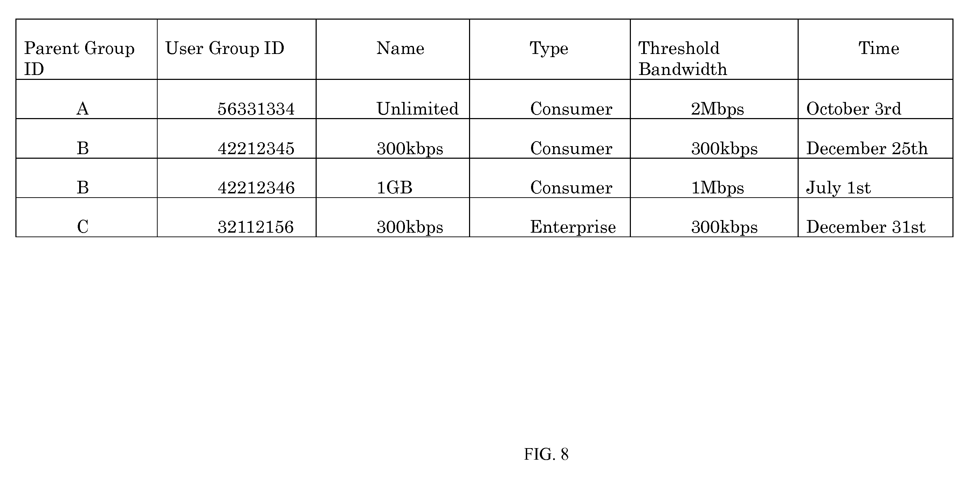

An example of user groups is shown in FIG. **8****.** In particular, FIG. **8** illustrates an example of a user group table, in accordance with embodiments of the invention. As seen in FIG. **8****,** a threshold amount of bandwidth may be modified based on, but not limited to, a particular user group as well as a particular date.

Existing technologies can offer most or all of these Packet Controllers based on static configuration. When IP traffic conditions change, or when a few heavy users are using up the traffic capacity so as to constantly cause slowness to general users, MVNOs or service providers may manually reconfigure the packet control system. In particular, MVNO's may manually reconfigure the packet control system to maintain desired service levels in accordance with users' service plans.

Methods provided herein may be used to dynamically and automatically apply suitable configurations to a Packet Controller using a servomechanism based on business rules compared against actual speed performance, packet loss, and packet retransmission rate. Additionally, one or more of the actual speed performance, packet loss, and packet retransmission rate may be measured in real-time.

Although preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A computer-implemented method for dynamically controlling per-session throughput and application priority, said method under the control of one or more computer systems configured with executable instructions and comprising:
receiving, at a mobile virtual network operator, a request to initiate a data-based application, wherein the request is received from a mobile device that is associated with a data plan that is managed by the mobile virtual network operator, and wherein the data-based application is associated with a category of data;
evaluating the request at a feedback-based packet control system of the mobile virtual network operator, wherein the feedback-based packet control system utilizes a speed monitoring module and business rule engine in evaluating the request;
allocating data to the data-based application request, wherein the allocation of data is based on at least one of a data plan and a category of data; and
providing the data-based application request to a server.

2. The computer-implemented method of claim 1, wherein voice over IP sessions are prioritized over email sessions.

3. The computer-implemented method of claim 1 or claim 2, wherein the allocation of data is based on a data plan.

4. The computer-implemented method of claim 1 or claim 2, wherein the allocation of data is based on a category of data.

5. The computer-implemented method of claim 1 or claim 2, wherein the allocation of data is based on a data plan and a category of data.

6. The computer-implemented method of any one of the preceding claims, wherein the allocation of data is further based on a time of day associated with the data-based application request.

7. The computer-implemented method of any one of the preceding claims, wherein the allocation of data is further based on a time of year associated with the data-based application request.

8. The computer-implemented method of any one of the preceding claims, wherein the speed monitoring module measures speed of a service.

9. The computer-implemented method of any one of the preceding claims, wherein the business rule engine sets requirements for allocation of data.

10. The computer-implemented method of any one of the preceding claims, wherein the feedback-based packet control system is embedded within the mobile virtual network operator.

11. A computer-implemented method for dynamically controlling per-session throughput and application priority, said method under the control of one or more computer systems configured with executable instructions and said method comprising:
receiving a predetermined amount of bandwidth at a mobile virtual network operator;
monitoring real-time performance of data traffic across the mobile virtual network operator, wherein monitoring real-time performance of data traffic includes assessing actual speed performance, packet loss, and packet retransmission rate;
assessing semomechanism feedback of data traffic across the mobile virtual network operator;
based on the monitored real-time performance and the assessed servomechanism feedback, determining a packet flow control configuration for one or more sessions that are managed by the mobile virtual network operator; and
applying the packet flow control configuration to the one or more sessions that are managed by the mobile virtual network operator.

12. The computer-implemented method of claim 11, wherein determining a packet flow control configuration for one or more sessions comprises determining a speed of packet flow for the one or more sessions.

13. The computer-implemented method of claim 11 or claim 12, wherein determining a packet flow control configuration for one or more sessions comprises determining a maximum threshold of packet loss for the one or more sessions.

14. The computer-implemented method of any one of claims 11 to 13, wherein determining a packet flow control configuration for one or more sessions comprises determining a minimum threshold packet retransmission rate for the one or more sessions.

15. The computer-implemented method of any one of claims 11 to 14, wherein determining a packet flow control configuration for one or more sessions is based on a data plan associate with the one or more sessions.

16. The computer-implemented method of claim 15, wherein the data plan is managed by the mobile virtual network operator.

17. The computer-implemented method of claim 15 or claim 16, wherein a determination of speed for the one or more sessions is based on whether a data plan associated with the session corresponds to an excessive use of bandwidth.

18. The computer-implemented method of claim 17, wherein a speed of a packet flow control configuration of a session is reduced when it is determined that the data plan associated with the session corresponds to an excessive use of bandwidth.
